## Europäisches Patentamt

**European Patent Office**

**Office européen des brevets**

(19)

(11) Publication number: **0 190 868**
**B1**

(12)

# EUROPEAN PATENT SPECIFICATION

(45) Date of publication of the patent specification:
**02.11.88**

(21) Application number: **86300577.3**

(22) Date of filling: **28.01.86**

(51) Int. Cl.⁴: **C 08 F 212/12,** C 09 J 3/14 //
(C08F212/12, 212:08, 212:12)

(54) **Hydrocarbon resins.**

(30) Priority: **31.01.85 GB 8502460**

(43) Date of publication of application:
**13.08.86 Bulletin 86/33**

(45) Publication of the grant of the patent:
**02.11.88 Bulletin 88/44**

(84) Designated Contracting States:
**BE DE FR GB IT NL**

(56) References cited:
**DE-A-2 041 423**

(73) Proprietor: **EXXON CHEMICAL PATENTS INC., P O Box 503 Florham Park, US- New Jersey 07932 (US)**

(72) Inventor: **Wouters, Guy, Avenue Van Becelaere 28 A, 1170 Brussels (BE)**

(74) Representative: **Bawden, Peter Charles, ESSO CHEMICAL LIMITED Esso Chemical Research Centre PO Box 1, Abingdon Oxfordshire OX13 6BB (GB)**

# 0 190 868

**Description**

This invention relates to hydrocarbon resins and their production. In particular the invention relates to resins compatible with wax and ethylene-vinyl acetate copolymers and with satisfactory softening point.

Canadian Patent 946 543 concerns the production of terpolymers by the polymerisation of 10 to 80 wt.-% of vinyl toluene, 10 to 80 wt.-% e.g. 10 - 50 wt.-% of alpha-methyl styrene and 10 to 50 wt.-% of styrene, the mole ratio of vinyl toluene to styrene being from 3 : 1 to 1 : 1. Such resins however have been found to have relatively high cloud points (about 175°C) and this makes them unsuitable for use as a blend with wax ethylene-vinyl acetate copolymers as coating compositions where clouding would readily occur.

United Kingdom Patent 1 451 524 concerns a copolymer of alpha-methyl styrene and styrene wherein the proportion by weight of the former ranges from 50 to 90 % and which has a softening point (ring and ball) of from 70°C to 100°C.

In accordance with this invention polymers are prepared in high yield of low colour to water-white by polymerising in the presence of a Friedel-Crafts catalyst 5 to 30 parts by weight of vinyl toluene, 15 to 45 parts by weight of styrene and 40 to 70 parts by weight of alpha-methyl styrene. Resins prepared by this process comprise polymers of 5 to 30 parts by weight of units derived from vinyl toluene, 15 to 45 parts by weight of units derived from styrene and 40 to 70 parts by weight of units derived from alpha-methyl styrene.

Compared with the resins disclosed in UK Patent 1 451 524 the replacement of part of the styrene by vinyl toluene leads to improved compatibility with wax and ethylene-vinyl acetate copolymers without a significant effect on the resin softening point.

Although the polymerisation feed has to have 40 to 70 wt.-% of alpha-methyl styrene, it is preferred that 50 to 60 % by weight of alpha-methyl styrene be used. The preferred amounts of styrene and vinyl toluene are 20 to 40 wt.-% of styrene and 10 - 25 wt.-% of vinyl toluene.

The individual vinyl toluene isomers may be used as well as mixtures of two or more of them.

The three monomers are preferably dissolved in a solvent, for example aromatic, aliphatic or mixed solvents. Specific examples of solvents are alkanes, for instance, n-heptane, n-octane; benzene, toluene and alkylated benzenes, for instance the mixed alkyl substituted benzenes known as Solvesso (Registered Trade Mark) 100. Generally the monomers are dissolved in 50 to 250 parts, for example about 100 parts, by weight of solvent for hundred parts by weight of total monomer.

Suitable Friedel-Crafts catalysts include aluminium chloride, aluminium bromide, aluminium chloride/hydrochloric acid/aromatic hydrocarbon complex or aluminium chloride/alkyl halide/aromatic hydrocarbon complex. In the former complex the aromatic hydrocarbon is preferably an alkylated hydrocarbon, e.g. o-xylene, mesitylene, ethyl benzene or isopropyl benzene and in the latter complex the alkyl chain of the alkyl halide can be linear or branched and can vary from 1 to 30 carbon atoms.

Other suitable Friedel-Crafts catalysts are acid liquid $AlCl_3$ sludges obtained as by-products during the alkylation of benzene or any other substituted aromatics (e.g. toluene or xylenes) with branched chain olefine.

Apart from aluminium trichloride, the preferred Friedel-Crafts catalyst is boron fluoride gas or a complex phenol, ether or acetic acid. Other $RF_3$ complexes can be used.

Generally, from 0.1 to 5 wt.-%, e.g. 0.2 to 1.5 wt.-% of Friedel-Crafts catalyst based on the total weight of monomers is used. Generally it is preferred that the reaction temperature be kept below 50°C, preferably below 45°C. Resin yields of over 60 % are usually achieved and these yields may often be between 70 and 80 % and sometimes higher.

After polymerization the residual catalyst is removed by for example washing with aqueous solution of alkali, ammonia or sodium carbonate. The final resin is stripped of unreacted hydrocarbons and low molecular weight oil oligomers for example by steam stripping or vacuum distillation.

The finished resin has a softening point of from 40°C to 160°C preferably 60°C to 160°C, usually 80° to 110°C. The Gardner colour is usually less than 1. For optimum use in hot melt adhesive formulations the resins should preferably have a softening point in the range 75°C to 115°C preferably 90°C - 105°C.

The resins obtained can be used in many applications which require low viscosity, good flexibility and elongation before or especially after chemical modification with polar compounds such as phenols, unsaturated anhydrides such as maleic anhydride or unsaturated acids (e.g. fumaric acid). These resins are designed for a wide range of end uses and applications. They can be applied to paper, metal, thermo-plastic films, cellophane (Registered Trade Hark), polyester, PVC, woven or non woven fabrics, glass etc. and for bonding such materials together. Typical applications are hot melts, carpet backing, coatings, e.g. coating with drying oil formulations, book binding, paper sizing or in any applications involving natural or synthetic and/or rubbers such as caulks, sealants or rubber tackification.

The main applications involving such resin properties are pressure sensitive adhesives, hot melt adhesives, hot melt pressure sensitive adhesives, low temperature adhesives, label adhesives, latex adhesives, surgical tapes and masking tapes where they may be blended with polymers such as ethylene/vinyl acetate copolymers and optionally with wax.

Also they may be used as tackifiers with natural rubber or synthetic rubbers such as polyisoproprene, EPDM, butyl, chlorobutyl, bromobutyl, neoprene and block copolymers for example styrene/butadiene and styrene/isoprene rubber (i.e. Shell Cariflex (Registered Trade Mark) TR1107) and mixtures of such rubbers.

The resins may also be emulsified in water and the emulsions used as tackifiers for water based adhesives such as those based on polyacrylates and carboxylated styrene butadiene copolymers. The resins may

2

**0 190 868**

conveniently be emulsified by the techniques described in our European Patent Application 0 085 471.

According to this invention one can use as a component in an adhesive formulation a resin which is a copolymer containing from 40 wt.-% to 70 wt.-% of units derived from alpha methyl styrene, from 5 wt.-% to 30 wt.-% of units derived from vinyl toluene and from 15 wt.-% to 45 wt.- % of units derived from styrene.

In particular the present invention provides a hot melt adhesive comprising:

(i) an ethylene vinyl acetate copolymer, preferably 20 to 30 wt.-%
(ii) wax, preferably 40 to 60 wt.-%
and (iii) a resin which is a copolymer containing from 40 wt.-% to 70 wt.-% of units derived from alpha methyl styrene, from 5 wt.-% to 30 wt.-% of units derived from vinyl toluene and from 15 wt.-% to 45 wt.-% of units derived from styrene.

**Example 1**

A two-litre flask was equipped with stirrer, thermometer, reflux condenser, nitrogen inlet, addition funnel containing 200 g alpha-methyl styrene, 100 g vinyl toluene, 100 g styrene and 400 g n-heptane, and a graduated tube containing 4.8 g AlCl$_3$ powder. The monomers were freshly distilled and the monomers and solvent were dried over molecular sieves.

One tenth of the monomer/solvent charge was added to the reactor together with one tenth of the AlCl$_3$ charge and stirred vigorously for 10 minutes, while keeping a constant temperature of 23 ± 2°C. The remaining monomer/solvent and catalyst were added in the same manner in nine successive portions.

After total monomer addition, the reaction mixture was stirred for additional 30 minutes at 20 - 25°C. At this stage, 100 gram water were introduced in the reactor to hydrolyse remaining catalyst and the aqueous phase was separated.

The polymer was then washed with 100 gram of 15 % aqueous ammonia solution. After separation of the aqueous phase, the polymer was distilled under nitrogen up to a pot temperature of 250°C to remove the solvent and eventual unreacted monomers and then steam sparged to 240°C until the water to oil ratio in the condenser receiver was 20 : 1.

In this way, 350 g of a crystal clear white resin was obtained (87.5 % yield based on the monomers). The resin had a ring and ball softening point of 110°C and a cloud point of 140°C (cloud point of a blend consisting of 25 wt.-% resin, 25 % ethylene-vinyl acetate copolymer of melt index = 25, and vinyl acetate content of 28 % and 50 wt.-% paraffin wax of melting point = 68°C).

The results obtained above are shown in Example d1 in the following Table 1 which also indicates the results obtained by the process of this invention (Examples d2, 3, f1, g1 and h1) for different monomer ratios and different reaction conditions.

Examples a1, 2 and 3, b1, c1 and e1 are included to show the results obtained when carrying out prior art processes.

In comparing e1 with d1 it is seen that the resin of our invention has a considerably lower cloud point. In comparing our resins with alpha-methyl styrene-styrene resins (a1, 2, 3, b1) our terpolymers have a lower cloud point at comparable softening points and are thus more compatible in wax, ethylene-vinyl acetate blends.

3

**Table 1**

| Monomers (Part wt.) | Example No | Temp. (°C) | Resin yield (%) | Fill yield (%) | Soft. pt. (°C) | Wax cloud pt. (°C) | Gardner colour |
|---|---|---|---|---|---|---|---|
| (αMS:50 ( ST:50 | a1 | 23 | 88.4 | 8 | 105 | 140 | <1 |
|  | a2 | 33 | 89.1 | 10.1 | 92 | 102 | <1 |
|  | a3 | 43 | 85.5 | 12.5 | 82 | 90 | <1 |
| (αMS:60 ( ST:40 | b1 | 23 | 87.1 | 8.5 | 97 | 101 | <1 |
| (αMS:70 ( ST:30 | c1 | 23 | 73 | 18.5 | 73 | <70 | <1 |
| (αMS:50 ( ST:25 ( VT:25 | d1 | 23 | 87.5 | 6.8 | 110 | 140 | <1 |
|  | d2 | 33 | 86.6 | 8.8 | 100 | 104 | <1 |
|  | d3 | 43 | 80 | 16 | 84 | <70 | <1 |
| (αMS:25 ( ST:25 ( VT:50 | e1 | 23 | 92.6 | 4.9 | 110 | 175 | <1 |
| (αMS:60 ( ST:20 ( VT:20 | f1 | 23 | 83.6 | 13.3 | 104 | 113 | <1 |
| (αMS:70 ( ST:15 ( VT:15 | g1 | 23 | 76.4 | 17.4 | 95 | 86 | <1 |
| (αMS:50 ( ST:40 ( VT:10 | h1 | 43 | 90 | 10 | 93.5 | 93 | <1 |

Polymerisation conditions: 100 pt. wt. monomer; 100 pt. wt. n-heptane; 1.2 pt. wt. AlCl$_3$

**Example 2**

Three terpolymers (Resins A, B and C) were prepared derived from 50 parts by weight of α-methyl styrene, 25 parts by weight of vinyl toluene (60/40 mixture of meta and para isomers) and 25 parts by weight of styrene.

All these resins were prepared by polymerising under a nitrogen blanket the three monomers dissolved in a solvent, 100 parts by weight of Solvesso (Registered Trade Mark) 100 for Resin A and 100 parts by weight of n-heptane for Resins B and C. 1.2 parts by weight of AlCl$_3$ were used as the catalyst.

After polymerisation the reaction mixture was first hydrolysed with water and Corexit (a demulsifier), followed by neutralisation with NR$_4$OH.

After neutralisation the solvent and unreacted monomers were distilled under a nitrogen stream up to a pot temperature of 250°C and then steam sparged at 250°C until the ratio of water to oil collected in the receiver was about 20 : 1. The resins was stabilised by the addition of 0.2 wt.-% of Irganox, an antioxidant.

In order to test the hot melt adhesive properties of resins A and B and compare them with two other commercial resins (Kristalex and Escorez 5000 a hydrogenated, thermally polymerised polycyclopentadiene) resin blends of the following compositions were prepared:

| Resin | 45 pt. by wt. |
|---|---|
| Escorene (Registered Trade Mark) UL 2528 (ethylene-vinyl acetate copolymer) | 45 pt. by wt. |
| MF1[1] =25; vinyl acetate 28 %) ML 445 wax (a hydrocarbon wax) | 10 pt. by wt. |
| Irganox 1076 (an antioxidant) | 0.5 pt. by wt. |

and resins prepared by processes generally described in United States Patent 3 000 868 and German Patent 2 406 618.

(1) Melt Index ASTM D1238-79

Table 2 gives some properties of the resins together with adhesive properties of the resin blends. It can be seen that usually at similar softening points Resins A, B and C have higher compatibility than other resins.

**Table 2**
<u>Adhesive Properties</u>

Formulation: Resin: 45 pt. wt.; Escorene (Registered Trade Mark) UL 02528: 45 pt. wt.;
ML 445 wax: 10 pt. wt.; Irganox 1076: 0.5 pt. wt.

| Type | Made According to US-A-3 000 868 | | Made according to German Patent 2 406 618 | | Kristallex F 100 | Escorez 5000 | Resin A | Resin B | Resin C |
|---|---|---|---|---|---|---|---|---|---|
| Coposition: methyl styrene | 25 | 25 | 70 | 45 | | | 50 | 50 | 50 |
| (% wt.)   vinyl toluene | 75 | 75 | - | - | Kr.F100 | E-5300 | 25 | 25 | 25 |
|     styrene | - | - | 30 | 55 | | | 25 | 25 | 25 |
| Softening point (°C) | 88 | 105 | 77 | 100 | 98 | 100 | 76 | 84 | 104 |
| Wax Cloud Point (°C) | 108 | 108 | <70 | 150 | 115 | <80 | <70 | <70 | 132 |
| Blend Cloud Point (°C) | >250 | 115 | 88 | >250 | 180 | 112 | 85 | 97 | >250 |
| Viscosity 180°C (Pa.s) | 19 | 32 | 18.5 | 20.5 | 23.5 | 16.5 | 15.5 | 16 | 21.5 |
| Viscosity 180°C (Pa.s) (after 150H/180°C) | 20 | 32 | 18 | 20 | 23.5 | 21.5 1500 | 16.5 | 17 | 22.5 |
| Polyethylene T-peel (g/cm) (1) | 330 | 250 | 590 | 330 | 350 | 1200 | 500 | 500 | 350 |
| Aluminium T-peel (g/cm) (1) | 100 | 500 | 1250 | 850 | 740 | 2.3 | 1300 | 1100 | 925 |
| Yield Point (MPa) | 2.5 | 2.9 | 1.8 | 2.9 | 2 | 4.9 | 1.7 | 2.1 | 2.6 |
| Tensile Strength (MPa) | 4.9 | 4.7 | 5.4 | 5.4 | 6.1 | 730 | 65 | 4.7 | 6.2 |
| Elongation (%) | 690 | 650 | 920 | 610 | 670 | -22 | 950 | 760 | 700 |
| Brittleness Temp. (°C) | -23 | -26 | -20 | -26 | -23 | - | -19 | -17 | -20 |
| Catalyst | BF3 | BF3 | BF3.Ph. | AlCl$_3$ | | | AlCl$_3$ | AlCl$_3$ | AlCl$_3$ |

(1)T-Peel Test PSTC-1

## Claims

1. A process for preparing a resin which comprises polymerising in the presence of a Friedel-Crafts catalyst 5 to 30 parts by weight of vinyl toluene, 15 to 45 parts by weight of styrene and 40 to 70 parts by weight of alpha-methyl styrene.

2. A process according to Claim 1 wherein the amount of vinyl toluene is 10 to 25 parts by weight, the amount of alpha-methylstyrene is 50 to 60 parts by weight and the amount of styrene is 20 to 40 parts by weight.

3. A process according to either of Claims 1 and 2 wherein the monomers are dissolved in 50 to 250 parts by weight of solvent per hundred parts by weight of total monomers.

4. A process according to any one of the preceding claims wherein the catalyst is aluminium trichloride.

5. A hydrocarbon resin comprising 40 to 70 wt.-% of units derived from alpha methyl styrene, 5 to 30 wt.-% of units derived from vinyl toluene and 15 to 45 wt.-% of units derived from styrene.

6. A hydrocarbon resin according to Claim 5 containing 50 to 60 wt.-% of units derived from alpha methyl styrene.

7. A hot melt adhesive comprising:

(i)     an ethylene-vinyl acetate copolymer;
(ii)    wax; and
(iii)   a resin according to any one of claims 5, 6 and 7.

8. The use of the resin according to any of Claims 5, 6 or 7 in hot melt pressure-sensitive adhesive, in a hot melt adhesive or in a coating.

## Patentansprüche

1. Verfahren zur Herstellung eines Harzes, bei dem 5 bis 30 Gewichtsteile Vinyltoluol, 15 bis 45 Gewichtsteile Styrol und 40 bis 70 Gewichtsteile alpha-Methylstyrol in Gegenwart eines Friedel-Crafts-Katalysators polymerisiert werden.

2. Verfahren nach Anspruch 1, bei dem die Vinyltoluol-Menge 10 bis 25 Gewichtsteile, die alpha-Methylstyrol-Menge 50 bis 60 Gewichtsteile und die Styrol-Menge 20 bis 40 Gewichtsteile betragen.

3. Verfahren nach Anspruch 1 oder 2, bei dem die Monomeren in 50 bis 250 Gewichtsteilen Lösungsmittel pro 100 Gewichtsteile der gesamten Monomeren gelöst werden.

4. Verfahren nach einem der vorangehenden Ansprüche, bei dem der Katalysator Aluminiumtrichlorid ist.

5. Kohlenwasserstoffharz, welches 40 bis 70 Gew.-% von aus alpha-Methylstyrol stammenden Einheiten, 5 bis 30 Gew.-% von aus Vinyltoluol stammenden Einheiten und 15 bis 45 Gew.-% von aus Styrol stammenden Einheiten enthält.

6. Kohlenwasserstoffharz nach Anspruch 5, welches 50 bis 60 Gew.-% von aus alpha-Methylstyrol stammenden Einheiten enthält.

7. Schmelzkleber, welcher

(i)     ein Ethylen-Vinylacetat-Copolymer,
(ii)    Wachs und
(iii)   ein Harz nach einem der Ansprüche 5, 6 und 7

enthält.

8. Verwendung des Harzes nach einem der Ansprüche 5, 6 oder 7 in einem Schmelzhaftkleber, in einem Schmelzkleber oder in einer Beschichtung.


**Revendications**

1. Procédé de préparation d'une résine, qui consiste à polymériser, en présence d'un catalyseur de Friedel-Crafts, 5 à 30 parties en poids de vinyltoluène, 15 à 45 parties en poids de styrène et 40 à 70 parties en poids d'alpha-méthylstyrène.

2. Procédé suivant la revendication 1, dans lequel la quantité de vinyltoluène est de 10 à 25 parties en poids, la quantité d'alpha-méthylstyrène est de 50 à 60 parties en poids et la quantité de styrène est de 20 à 40 parties en poids.

3. Procédé suivant l'une des revendications 1 et 2, dans lequel les monomères sont dissous dans 50 à 250 parties en poids de solvant pour 100 parties en poids des monomères totaux.

4. Procédé suivant l'une quelconque des revendications précédentes, dans lequel le catalyseur est le trichlorure d'aluminium.

5. Résine hydrocarbonée comprenant 40 à 70 % en poids de motifs dérivés d'alpha-méthylstyrène, 5 à 30 % en poids de motifs dérivés de vinyltoluène et 15 à 45 % en poids de motifs dérivés de styrène.

6. Résine hydrocarbonée suivant la revendication 5, contenant 50 à 60 % en poids de motifs dérivés d'alpha-méthylstyrène.

7. Adhésif fondant à chaud, comprenant:

(i)     un copolymère éthylène-acétate de vinyle;
(ii)    une cire; et
(iii)   une résine suivant l'une quelconque des revendications 5, 6 et 7.

8. Utilisation de la résine suivant l'une quelconque des revendications 5, 6 ou 7 dans un adhésif sensible à la pression fondant à chaud, dans un adhésif fondant à chaud ou dans un revêtement.